# FASCICULE DE BREVET EUROPEEN

(11) **EP 0 485 275 B1**
(45) Date de publication et mention de la délivrance du brevet: **21.10.1998**
(21) Numéro de dépôt: 91402961.6
(22) Date de dépôt: 05.11.1991
(51) Int. Cl.: G06F 1/00, G06F 3/033

(54) **Dispositif de sécurité, comportant une mémoire et/ou un microcalculateur pour machines de traitement**
Sicherheitsvorrichtung mit einem Speicher und/oder einem Mikroprozessor für Datenverarbeitungsmaschinen
Security device with a memory and/or a microprocessor for data processing machines

(30) Priorité: 06.11.1990 FR 9013727
(43) Date de publication de la demande: 13.05.1992
(73) Titulaire: BULL CP8, 78430 Louveciennes (FR)
(72) Inventeur: Ugon, Michel, F-78310 Maurepas (FR)
(74) Mandataire: Corlu, Bernard Edouard

(56) Documents cités:
- EP-A- 0 183 608
- EP-A- 0 314 530
- EP-A- 0 365 918
- ELEKTRONIK. vol. 36, no. 21, 16 octobre 1987, MUNCHEN DE pages 126 - 130; Güntner et al.: "Mehr als eine Tastatur"
- IBM TECHNICAL DISCLOSURE BULLETIN. vol. 29, no. 5, octobre 1986, NEW YORK US pages 1939 - 1944; "Software protection by decryption on multi-usage serial interface"

## Description

L'invention est relative a un dispositif de sécurité permettant de préserver les données d'une ou de plusieurs machines de traitement de l'information, du genre comprenant au moins une mémoire et/ou un microcalculateur externes à la machine de traitement, de façon à permettre un échange de données entre la machine de traitement et la mémoire ou le microcalculateur du dispositif de sécurité.

L'essor des applications informatiques personnelles ou de bureau fait apparaître le besoin de plus en plus fréquent de manipuler des données qui doivent, dans certains cas, demeurer confidentielles. Or, les données informatiques sont généralement stockées sur des supports très vulnérables, tels que des mémoires, des disquettes, des bandes magnétiques ou encore des disques durs.

Afin de conférer une certaine confidentialité aux données, il a été envisagé de les protéger à l'aide de mots de passe. Le principe en est le suivant : un utilisateur ne peut accéder à une application ayant trait à des données particulières qu'en présentant un mot de passe, c'est-à-dire en introduisant à l'aide d'un clavier ou de tout autre moyen de saisie approprié une succession de termes alphabétiques ou numériques ou alphanumériques. Une telle méthode n'est pas particulièrement fiable car il existe des procédés permettant de retrouver le mot de passe, ou bien encore de s'en affranchir, ce qui permet alors un "piratage" relativement aisé de l'application.

Une autre méthode de protection consiste à retirer physiquement le support contenant les données, après chaque fermeture de l'application considérée. Ceci suppose une rigueur extrême de la part de l'utilisateur, et n'est envisageable que si le support contenant les données est amovible, ce qui exclut à priori le cas où les données sont sur le disque dur, et que si le support, après avoir été retiré, peut être enfermé en lieu sûr. Par ailleurs, ceci n'est vraiment pratique que si également un seul utilisateur est susceptible de manipuler les données considérées.

Le problème de la protection des données est donc crucial, et ce d'autant plus que l'on assiste actuellement à une diffusion de plus en plus importante d'ordinateurs portables légers qui peuvent être aisément transportés pour effectuer des travaux, notamment lors de déplacements. Il n'est pas rare, en effet, de voir maintenant des personnes utiliser ce genre de machine chez un client pour gagner du temps lors d'une transaction ou d'une négociation. Une absence, même de courte durée de l'utilisateur, peut être mise à profit par les tiers pour tenter de percer certains des secrets de la machine, notamment les secrets des fichiers qu'elle incorpore.

On a remédié aux inconvénients des méthodes antérieures en proposant, pour contrôler les droits de l'utilisateur de façon extrêmement sûre, ou pour protéger les fichiers, d'utiliser des cartes à mémoire et/ou à microcalculateur, telles que celles décrites dans les brevets français N° FR-A-2 401 459 et N° FR-A-2 337 381, correspondant respectivement aux brevets américains N° US-A-4 211 919 et N° US-A-4 222 516 de la demanderesse. La carte, ou un support portable équivalent contient une mémoire électronique avec par exemple des données secrètes, qui sont utilisées dans des processus de vérification des droits du porteur, ou bien encore dans des processus de mémorisation ou de chiffrement/déchiffrement des données à protéger.

Les procédés de vérification ou de sécurité mettant en oeuvre des objets portatifs, tels que les cartes à mémoire et/ou à microcalculateur, sont nombreux et ne font pas l'objet de la présente invention. Certaines consistent en un contrôle des droits du porteur, d'autres en un chiffrement des données à protéger, d'autres interdisent le lancement d'une application tant que la carte n'a pas été lue, et tant que les données qu'elle renferme n'ont pas été combinées avec les données à protéger : cette dernière méthode fait l'objet du brevet français N° FR-A-2 523 745 correspondant au brevet américain N° US-A-4 683 553 au nom de la demanderesse, dans lequel il est prévu d'associer une carte à mémoire et microcalculateur à un logiciel d'applications, et dans lequel la carte contient des informations nécessaires au lancement du logiciel. Un dialogue préalable entre la carte et l'appareil de traitement est nécessaire, sans lequel le logiciel d'application ne peut être mis en oeuvre.

Il faut noter que selon le degré de sécurité requis, une carte ou un objet équivalent, à mémoire et/ou microcalculeur permet, en raison de sa grande souplesse d'utilisation, d'utiliser l'une ou l'autre des méthodes évoquées, ou bien encore de combiner tout ou partie de ces méthodes.

En conséquence, une carte ou tout support équivalent, à mémoire et/ou microcalculateur permet donc de conférer une grande sûreté à des applications informatiques.

Cependant, lorsque l'on désire utiliser un objet portatif en connexion avec un ordinateur, il faut utiliser un lecteur spécialisé extérieur, relié par une interface disponible sur la machine de traitement. Ainsi, par exemple dans certains ordinateurs, le lecteur spécialisé est relié à la machine par une interface standard de type V24 ou RS232. Un tel lecteur, outre son coût et son encombrement, mobilise donc une sortie de la machine qui ne peut être utilisée à d'autres fins. Cette connexion du lecteur est donc susceptible d'empêcher de connecter une autre ressource ou périphérique utile, telle qu'une imprimante, une ligne téléphonique ou un réseau.

Afin de pallier ces inconvénients, certains fabricants ont proposé d'incorporer le lecteur dans la machine, ce qui ne mobilise pas une sortie de cette dernière. Cependant, cette solution ne peut être envisagée que si elle a été prévue dès la conception de la machine, car il est nécessaire de prévoir les interfaces matériels et l'emplacement du lecteur. Un lecteur doit donc être adapté à un type de machine, ce qui n'est pas une solution idéale, notamment lorsque la machine est appelée à évoluer.

Une solution qui consisterait à prévoir une sortie supplémentaire pour un lecteur de cartes ou d'objets portatifs équivalents implique également une modification des interfaces matérielles, qui n'est pas extrêmement rentable, car le dispositif de sécurité n'est généralement utilisé que lors du lancement ou de la fermeture d'une application. Donc, son temps d'utilisation est extrêmement court comparé au temps d'utilisation de la machine. Par ailleurs, certains utilisateurs n'ont pas besoin de ce genre de dispositif, et ne voudraient pas supporter le surcoût entraîné par l'existence de cette sortie.

Un premier but de l'invention est donc de remédier à tous les inconvénients de connexion ou d'emplacement, tout en utilisant un dispositif de sécurité mettant en oeuvre au moins une mémoire et/ou un microcalculateur, de façon à conserver les avantages et les potentialités de ce type de dispositif.

Par ailleurs, un second but de l'invention est la réalisation d'un dispositif pouvant se connecter aisément et à moindre coût sur tous types de machines compatibles entre elles, sans nécessiter de modification des interfaces physiques existantes.

Un troisième but de l'invention est de conserver l'aspect portable du dispositif de sécurité, pour que l'utilisateur, de la même façon qu'avec une carte ou un support équivalent à mémoire et/ou à microcalculateur, puisse le transporter avec lui, s'il ne désire pas se déplacer avec son propre ordinateur, et qui lui permette néanmoins de garder la sécurité des applications qu'il met en oeuvre en n'importe quel site sur lequel il se trouve, en le connectant à la machine qu'il utilise.

Une machine de traitement de données, telle qu'un ordinateur de bureau ou un ordinateur personnel, comporte une unité centrale et des organes périphériques. L'unité centrale comporte un processeur et les mémoires de données (RAM) ou de programme (ROM) nécessaires à son fonctionnement, alors que les organes périphériques permettent soit de conserver une trace des traitements effectués (mémoires de masse, à disque dur, à disquettes, à bandes) ou bien encore permettent le dialogue entre l'utilisateur et la machine (clavier, écran, imprimante) ou le dialogue entre la machine et le milieu extérieur (connecteurs d'entrée/sortie). Selon la configuration, certains organes périphériques peuvent être incorporés physiquement dans le même bloc que l'unité centrale. Ainsi, un ordinateur portable comportera par exemple dans le même bloc le clavier, l'écran, l'unité centrale, éventuellement un disque dur ou un lecteur de disquettes, de même qu'un modem. Dans d'autres configurations, de façon connue en soi, l'unité centrale est physiquement séparée de tout ou partie des organes périphériques. Dans ce cas, l'unité centrale comporte alors des circuits d'interfaces reliés à des connecteurs d'entrée/sortie spécifiques à chaque périphérique complémentaire susceptible d'être connecté à la machine.

Les buts de l'invention sont atteints en utilisant, comme base au dispositif de sécurité, un organe périphérique qui n'est pas incorporé à l'intérieur d'une machine de traitement, mais au contraire dont la connexion s'effectue par l'extérieur, et qui est léger, de faible dimension, et en conséquence facilement transportable, et dont la connexion est en général prévue sur tout type de machine.

Le document EP-A-0.314.530 enseigne une mémoire incorporant des données permettant de contrôler l'accès à un logiciel stocké dans une machine de traitement de données. La mémoire est branchée sur une interface de périphérique standard.

Le document EP-A-0.183.608 enseigne d'utiliser des conducteurs non affectés d'un câble de liaison d'une interface de périphérique standard pour effectuer une procédure de contrôle d'accès à un logiciel stocké dans une machine de traitement de données. Ladite procédure est conduite entre la machine et un dispositif de sécurité inséré dans un connecteur du câble de liaison.

Le document EP-A-0.365.918 enseigne de sécuriser l'utilisation d'un stylo électronique coopérant avec un écran d'une machine de traitement de données. A cet effet, au signal de données échangé entre le stylo et la machine de traitement de données est associé un signal d'identification de l'usager.

Le problème est résolu selon l'invention conformément à la revendication 1.

D'autres mode de réalisation de l'invention sont définis dans les revendications dépendantes.

Un périphérique de pointage est tout particulièrement adapté pour résoudre l'ensemble des buts de l'invention. En effet, il s'agit d'un organe périphérique dont la présence est pratiquement toujours envisagée sur une machine de traitement, quelle que soit sa configuration. Il s'agit d'un dispositif permettant entre autres le déplacement d'un curseur sur l'écran de visualisation associé à la machine afin de faciliter, dans certaines applications, le dialogue entre l'utilisateur et sa machine. Dans un tel cas, le principe de fonctionnement d'un périphérique de pointage est connu en soi : il s'agit en fait de transformer une commande provoquée par l'utilisateur, à l'aide de ce périphérique, en un déplacement du curseur sur l'écran. D'autres utilisations sont connues, telles que la validation de zone de l'écran ou l'envoi de certaines commandes.
- Un premier type de périphérique de pointage connu est celui qui est appelé "souris" : il s'agit d'un dispositif que l'utilisateur déplace sur un plan, et qui comporte au moins une sphère ou un capteur optique. Le déplacement du curseur est asservi à celui du périphérique, et lorsqu'il a atteint la position désirée, l'utilisateur valide la nouvelle position à l'aide d'un bouton prévu sur le boîtier de la souris, ou d'une touche du clavier de la machine. Des souris perfectionnées comportent d'autres boutons permettant d'augmenter le nombre d'opérations qu'il est possible de réaliser à l'aide de ce dispositif.
- Un autre dispositif connu est la sphère de saisie (en anglais : "Trackball"), dont le principe de fonctionnement est semblable à celui de la souris, à une petite différence près : l'utilisateur, au lieu de déplacer le dispositif sur un plan, manipule directement la sphère pour obtenir le déplacement désiré du curseur. De la même manière qu'avec une souris, la validation est obtenue à l'aide d'un bouton associé au boîtier enfermant la sphère, ou en pressant la sphère elle-même, ou à l'aide du clavier de la machine.

Il donc possible d'utiliser, pour réaliser le support du module à mémoire et/ou à microcalculateur soit le boîtier d'une souris, soit un dispositif équivalent se présentant sous la forme d'une sphère manipulée directement par l'utilisateur.

Dans un mode de réalisation, la mémoire et/ou le microcalculateur sont incorporés à demeure dans le périphérique de pointage.

Dans un autre mode de réalisation, la mémoire et/ou le microcalculateur sont incorporés dans un support amovible, et le dispositif comporte alors des moyens pour recevoir le support amovible et permettre la connexion électronique du module et la connexion nécessaire au circuit électronique du dispositif.

D'autres caractéristiques et avantages de l'invention apparaîtront avec la description qui va suivre, faite en regard des figures annexées sur lesquelles :
- les figures 1 et 2 sont respectivement une vue latérale et une vue de dessus d'un premier mode de réalisation d'un dispositif selon l'invention ;
- les figures 3, 4, 5 représentent trois variantes du dispositif selon l'invention ;
- les figures 6, 7, 8 illustrent trois modes de réalisation possibles d'un circuit électronique permettant le fonctionnement du dispositif de l'invention ;
- la figure 9 représente un organigramme de fonctionnement possible du circuit de la figure 8.

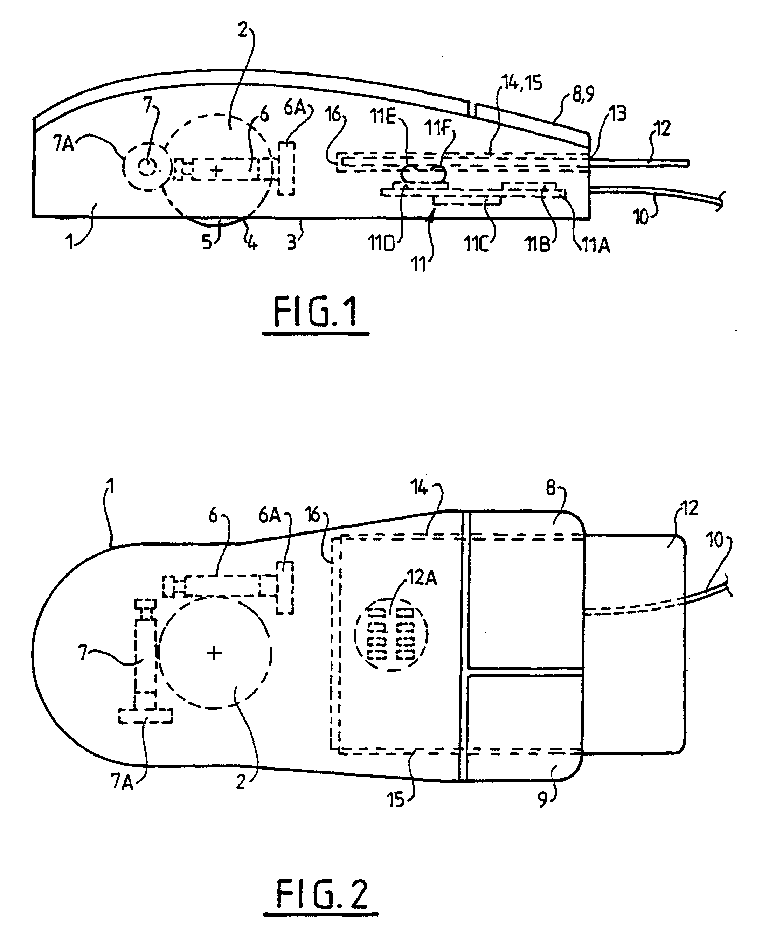

Les figures 1 et 2 illustrent respectivement une vue latérale et une vue de dessus d'un périphérique de pointage constitué par une souris dont le capteur utilise une sphère, lorsqu'elle est modifiée pour recevoir un objet portatif tel qu'une carte à mémoire et/ou microcalculateur permettant de rendre sûre l'utilisation d'une machine de traitement, telle qu'un ordinateur portable, familial, ou de bureau.

La souris est constituée à partir d'un boîtier (1) en matériau plastique par exemple, ayant une forme ergonomique, pour permettre sa saisie par la main de l'utilisateur. A l'intérieur du boîtier (1) se trouve un logement (non représenté) contenant une sphère (2). La face inférieure (3) du corps de la souris est percée d'une ouverture (4) circulaire, permettant de faire ressortir une partie (5) de la sphère, de sorte que lorsque le boîtier est déplacé sur un plan horizontal, la sphère roule alors sur ce plan. La sphère est au contact de deux galets (6, 7) cylindriques, portés à l'intérieur du corps de la souris, et ces galets (6, 7) sont entraînés en rotation par la sphère, lorsqu'elle se déplace. Chaque galet (6, 7) est relié à un moyen (6A, 7A), tel qu'un codeur rotatif relié à un dispositif électronique incorporé dans le corps de la souris, de sorte que le mouvement de la sphère peut être transformé en signal électrique représentatif des déplacements de cette dernière sur le plan horizontal. Au moins un bouton (8, 9) est accessible sur le boîtier de la souris, à une extrémité de celle-ci, et est en connexion électrique avec un ensemble électronique (11) incorporé à l'intérieur du boîtier (1) de la souris, pour permettre le dialogue avec la machine de traitement. Tout ce qui vient d'être décrit est connu en soi, car déjà décrit dans de nombreux brevets ou publications. Un cordon (10), situé généralement à l'extrémité de la souris la plus proche des boutons (8, 9), pour des raisons ergonomiques, permet la connexion de cette dernière avec la machine de traitement, par l'intermédiaire d'une liaison interface, telle qu'une liaison interface standard V24 ou RS232.

Le circuit électronique (11) incorporé à l'intérieur du corps de la souris permet donc les fonctions usuelles de pointage, et est de plus agencé pour permettre l'emploi d'un support électronique, tel qu'une carte (12) à mémoire et/ou microcalculateur.

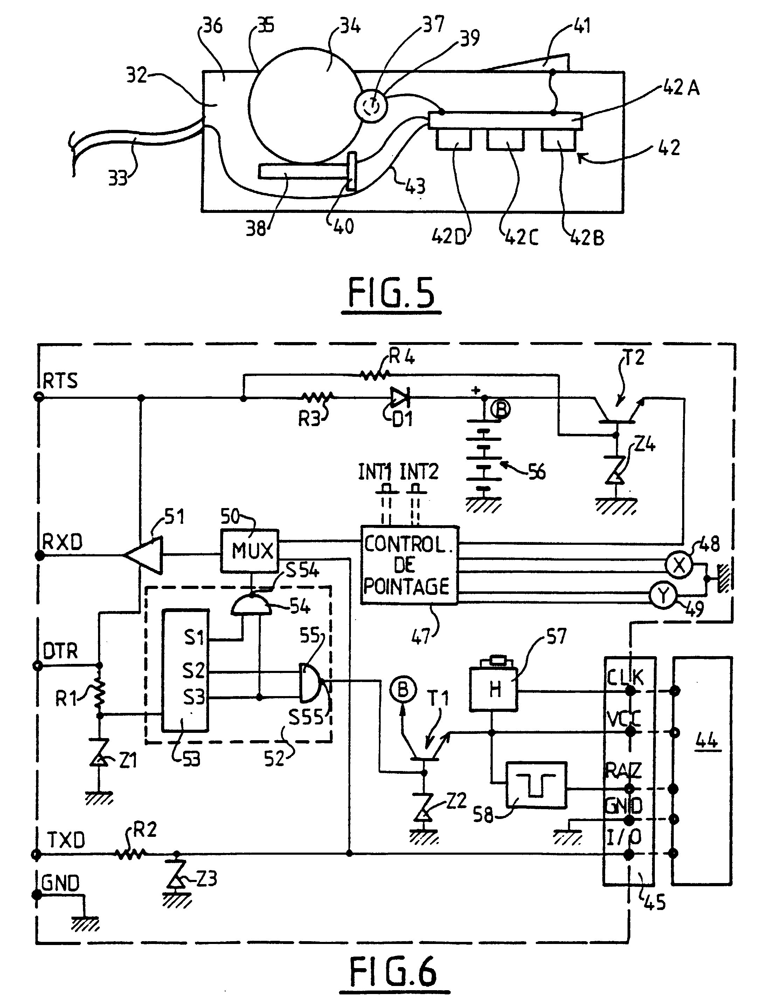

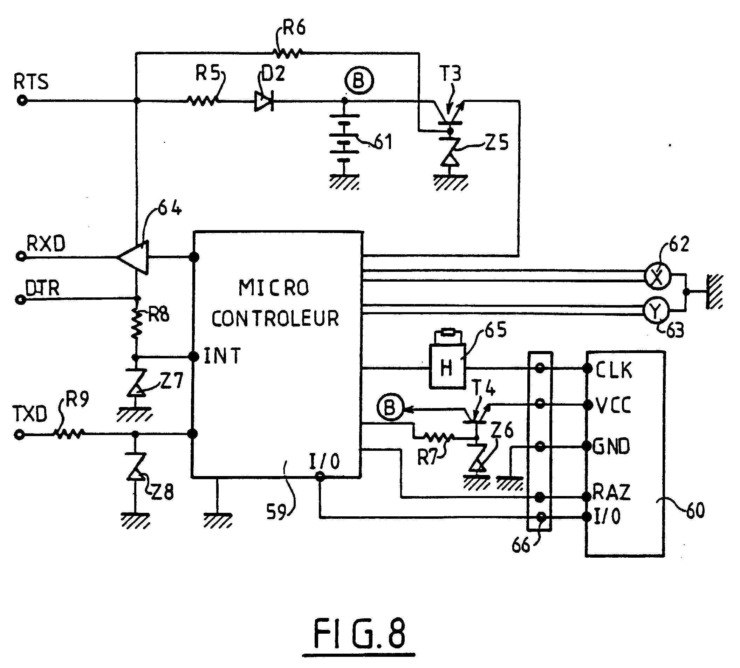

Un premier schéma de principe du circuit électronique incorporé à l'intérieur du corps de la souris apparaît sur la figure 6, et un second mode de réalisation possible apparaît sur la figure 8, qui seront décrites ultérieurement.

L'ensemble électronique (11) incorporé à l'intérieur du corps (1) comprend par exemple un circuit imprimé (11A) et des circuits électroniques (11B, 11C) permettant à la fois d'assurer le contrôle de la position du capteur, et l'échange des informations avec le support électronique (12).

Un support électronique (12) tel qu'une carte à mémoire et/ou microcalculateur comporte un corps en matière plastique, de taille rectangulaire, dans lequel est incorporé un ensemble électronique (12A) couramment appelé pastille ou bouton. La pastille comprend les circuits électroniques de l'objet portatif (12), c'est-à-dire la mémoire et/ou le microcalculateur et des plages de contact permettant la connexion électrique du support électronique avec l'extérieur. La forme du support électronique peut être normalisée ou non, et les plages électroniques de contact sont disposées en conséquence.

Le corps de la souris est agencé pour que l'objet portatif (12) puisse y être introduit, et pour que la (ou les) mémoire(s) et/ou le microcalculateur du support électronique puissent être mis en contact électrique avec l'ensemble électronique (11) incorporé à l'intérieur de la souris. A cet effet, une ouverture (13) est par exemple aménagée, de préférence à l'extrémité du corps de la souris d'où sort le cordon (10), c'est-à-dire en-dessous des boutons (8, 9). Cette disposition permet que l'utilisateur qui utiliserait une telle souris ait le même confort d'emploi et les mouvements qu'avec une souris normale.

L'ouverture (13), qui permet le passage de l'objet portatif (12), est associée à des moyens de guidage du support électronique, tels que des glissières (14, 15) latérales, et par des moyens de butée (16) permettant d'arrêter le mouvement du support lorsqu'il est en place. La réalisation de l'ouverture (13), des moyens de guidage (14, 15), et des moyens de butée (16), est à la portée de l'homme du métier sans qu'il soit nécessaire d'étendre la description sur ce point.

Le circuit imprimé (11A) portant les circuits électroniques (11B, 11C) porte également des moyens de connexion (11D) permettant le contact électrique entre l'ensemble électronique (11) et les plages de contact de la pastille (12A). Les moyens de connexion (11D) comportent par exemple des lamelles de contact dont deux (11E, 11F) sont visibles sur la figure 1.

L'agencement représenté sur les figures 1 et 2 permet donc qu'un objet portatif (12), tel qu'une carte à mémoire et/ou microcalculateur, soit inséré par glissement à l'intérieur du corps de la souris, et que, lorsque l'objet portatif (12) est un place, la connexion électrique soit alors réalisée.

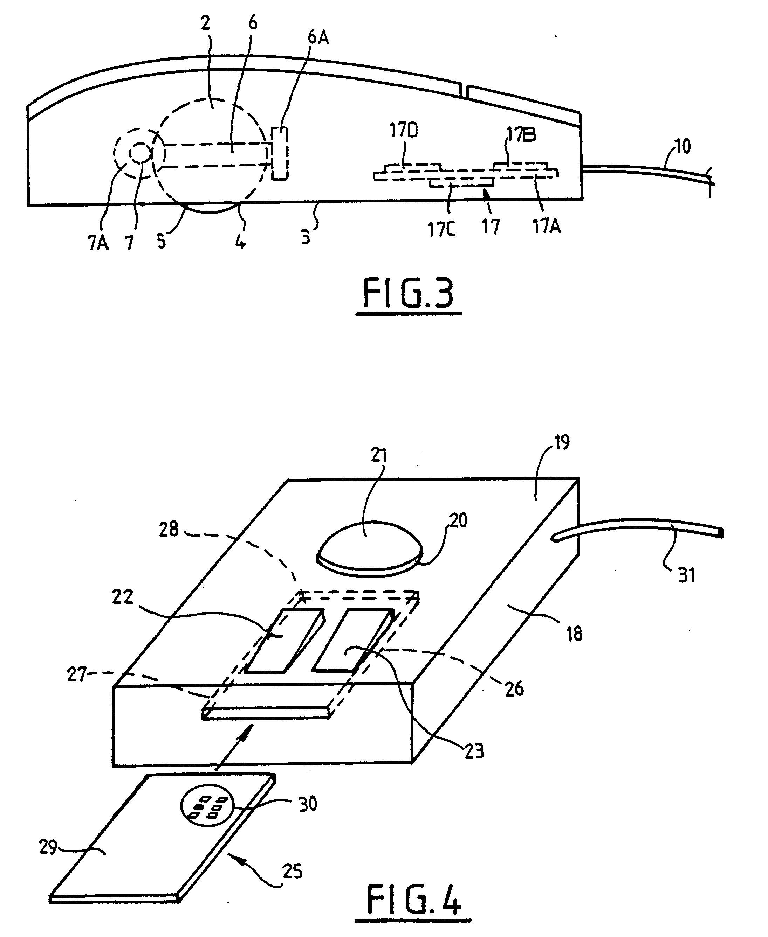

La figure 3 illustre, en vue latérale, une variante de réalisation d'un dispositif de sécurité pour machine de traitement de données, réalisée à partir d'une souris, mais dans lequel, cette fois-ci, le circuit électronique de sécurité, c'est-à-dire au moins une mémoire et/ou un microcalculateur, ne sont plus amovibles, mais sont incorporés à demeure à l'intérieur du boîtier (1) de la souris. Il en résulte que le dispositif représenté sur cette figure comporte un bon nombres d'éléments identiques ou similaires à ceux des figures 1 et 2.

En particulier, la souris comporte un boîtier (1) dans lequel une sphère (2) en contact avec des galets (6, 7), dont le mouvement de rotation est transformé en grandeur électrique à l'aide de potentiomètres (6A, 7A). La sphère communique avec l'extérieur par l'intermédiaire d'une ouverture (11) ménagée dans la paroi inférieure (3) du boîtier.

Par ailleurs, au moins un bouton de commande (8, 9) est situé sur la face supérieure du boîtier de la souris, de préférence du côté de la paroi verticale d'où sort le cordon (10) de connexion avec l'extérieur.

A l'intérieur du boîtier est incorporé un ensemble électronique (17) constitué d'un circuit imprimé (17A) avec des composants électroniques (17B, 17C, 17D). Le rôle des circuits (17B, 17C) est d'assurer à la fois le dialogue entre la souris et la machine de traitement lorsqu'elles se trouvent connectées, et le dialogue entre les circuits de sécurité et la machine de traitement. Les circuits de sécurité, constitués par au moins une mémoire et/ou un microcalculateur, sont dans cette variante les circuits référencés (17D).

Bien entendu, la mémoire et/ou le microcalculateur incorporés dans le circuit (17D) ont une structure similaire ou identique à celle que l'on rencontre dans les cartes à microcircuit, par exemple dans celles décrites dans les brevets français déjà cités au nom de la demanderesse, et donc à celle de la carte des figures 1 et 2.

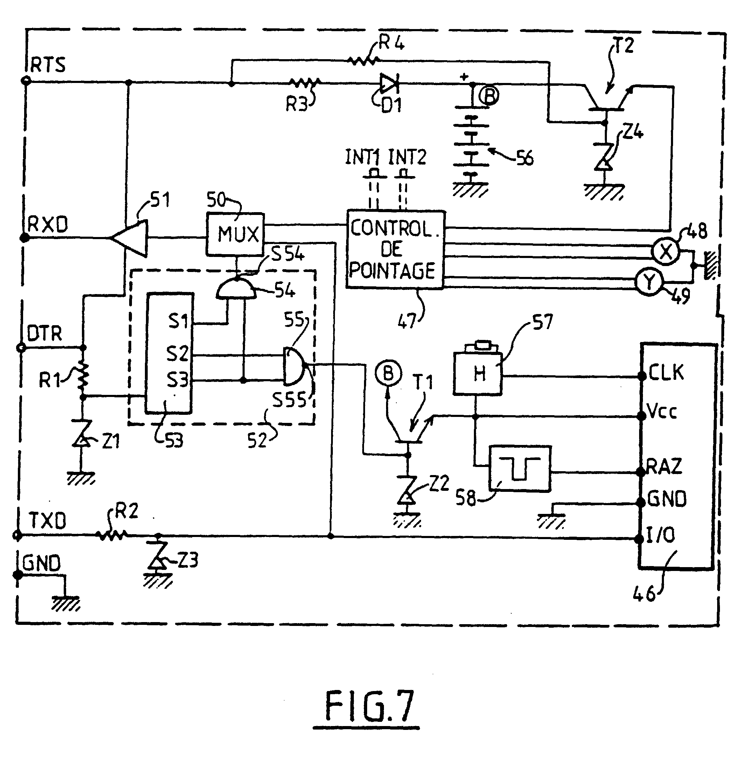

Comme pour la variante des figures 1 et 2, la structure électronique complète d'un ensemble électronique (17) sera décrite en regard des figures 6 et 7.

La figure 4 illustre, en perspective, un dispositif de sécurité conforme à l'invention, réalisé à partir d'une boule de saisie (Trackball).

Le dispositif est constitué d'un boîtier (18) dont la face supérieure (19) est percée d'un orifice (20) duquel dépasse une sphère (21). Le mouvement de rotation de la sphère (21) est, comme dans le cas d'une souris, transmis à des capteurs électriques tels que des codeurs rotatifs, reliés à un circuit électronique (non représenté sur la figure), incorporés à l'intérieur du boîtier (18).

Sur la face supérieure (19) du boîtier, ont été représentés deux boutons (22, 23) de commande dont les fonctions sont celles des boutons (8, 9) de la souris représentée sur les figures 1, 2 et 3. Ces boutons ne sont pas nécessairement présents, le déplacement d'un curseur pouvant être validé par l'intermédiaire d'une touche du clavier qui équipe toutes machines de traitement, ou par l'intermédiaire d'un appui sur un écran tactile lorsque la machine en est équipée, ou par un appui sur la sphère elle-même.

Une ouverture (24) est réalisée dans l'une des parois verticales du boîtier pour permettre la mise en connexion électrique des circuits électroniques d'un objet portatif (25), tel qu'une carte à mémoire et/ou microcalculateur avec les circuits électroniques incorporés à l'intérieur du boîtier. Le circuit électronique incorporé à l'intérieur du boîtier peut être identique ou similaire à celui (11) incorporé à l'intérieur du corps (1) de la souris des figures 1 et 2. En outre, si l'objet portatif a la forme d'une carte rectangulaire, alors la fente (24) se prolonge par des moyens permettant que la carte puisse être insérée par exemple en translation à l'intérieur du boîtier. Ces moyens sont par exemple constitués par des glissières (26, 27) et par des organes de butés (28) qui ont été schématisés en traits interrompus sur cette figure 3.

L'objet portatif (25) lorqu'il s'agit d'une carte au format carte de crédit, peut avoir la structure décrite en regard des figures 1 et 2, et dans les brevets précités. Ainsi, il comporterait un corps (29) dans lequel serait incorporée une pastille (30) constituée par les circuits électroniques (mémoire et/ou microcalculateur) et par des plages de contact extérieures, apparaissant sur l'une des faces du corps (29) et permettant le contact avec un connecteur, tel qu'un connecteur à lamelles incorporé à l'intérieur du boîtier.

Enfin, la connexion entre le boîtier (18) et la machine de traitement s'effectue par l'intermédiaire d'un cordon (31) à plusieurs conducteurs dont la description détaillée sera faite ultérieurement.

Sur la figure 5, on a illustré de façon schématique une variante de réalisation d'un dispositif de sécurité à partir d'une boule de saisie. Le dispositif comporte un boîtier (32) pouvant être connecté à la machine de traitement par l'intermédiaire d'un cordon (33) de connexion. Une sphère (34) de saisie est accessible aux doigts ou à la main d'un utilisateur, par l'intermédiaire d'une ouverture (35) ménagée dans la face supérieure (36) du boîtier. La sphère est en contact avec deux galets (37, 38) permettant de transformer le déplacement en grandeur électrique. A cet effet, les galets (37, 38) sont par exemple respectivement reliés à des codeurs (39, 40).

En outre, au moins un bouton (41) de saisie peut être présent et accessible par la face supérieure (36) du boîtier.

Un ensemble électronique (42) est incorporé à l'intérieur du boîtier, auquel sont reliés les conducteurs (43) issus du câble (33) de liaison, les codeurs (39, 40), ou d'une façon plus générale les moyens électriques permettant de transformer le mouvement de la sphère en grandeur électrique. Enfin, les boutons de commande (41), lorsqu'ils sont présents, sont également reliés au circuit électronique (42).

La liaison des divers éléments qui viennent d'être mentionnés avec le circuit électronique (42) est effectuée par exemple d'un circuit imprimé (42a), faisant partie du circuit électronique (42), et portant par ailleurs des éléments électroniques actifs (42B, 42C, 42D). Les éléments (42B, 42B, 42D) réalisent en fait les parties actives du circuit électronique (42).
- Une première partie (42B) permet d'assurer la gestion ou le traitement des mouvements de la sphère ;
- Une seconde partie (42B) comporte la mémoire et/ou le microcalculateur assurant la sécurité, ainsi que les circuits électroniques annexes nécessaires à son fonctionnement ;
- la troisième partie (42D) assure l'interface entre les deux premières.

Bien entendu, on pourrait envisager que l'ensemble des parties (42B, 42C, 42D) soit réalisé dans un circuit intégré monolithique ou de toute autre manière. La seule condition est que le circuit électronique (42) puisse assurer la gestion des mouvements de la sphère et la gestion de la mémoire et/ou du microcalculateur de sécurité.

La figure 6 illustre un mode de réalisation d'un circuit électronique utilisable dans les dispositifs décrits en regard des figures 1, 2 et 4.

La figure 7 illustre un mode de réalisation possible d'un circuit électronique utilisable dans les dispositifs des figures 3 et 5.

La différence entre les figures 6 et 7 réside simplement dans le fait que, dans le cas de la figure 6 le module (44) est amovible, et en conséquence le circuit électronique comporte un connecteur (45) permettant que les plages de contact du module (44) soient reliées à des conducteurs correspondant du circuit électronique, alors que dans le cas de la figure 7, le module (46) fait partie du circuit électronique, et ses bornes de contact sont directement reliées, par exemple par soudage, aux conducteurs correspondant du circuit électronique.

Indépendamment de cela, les circuits électroniques des figures 6 et 7 sont identiques, et en conséquence les mêmes éléments portent les mêmes références.

La structure électronique et le fonctionnement d'un module tel qu'un dispositif électronique à mémoire et/ou à microcalculateur ne font l'objet de la présente invention. Néanmoins, un tel dispositif nécessite, pour fonctionner, une tension d'alimentation Vcc venant de l'extérieur, un signal d'horloge CLK, un signal de réinitialisation RAZ des circuits qu'il incorpore, et possède en outre au moins une borne d'entrée/sortie I/O des données, de même qu'il possède une borne de mise à la masse.

En conséquence, les circuits électroniques des figures 6 et 7 comportent des sous-ensembles de circuits permettant de fournir aux modules (44, 46) les différents signaux qui viennent d'être mentionnés. Dans le cas de la figure 6, la connexion entre le circuit principal et le module s'effectue par l'intermédiaire du connecteur (45) qui comporte alors des plages de contact appropriées, alors que dans le cas de la figure 7, les bornes du module sont directement reliées à des conducteurs correspondants du circuit.

Un capteur manuel de saisie de données, tel qu'une souris ou une boule de saisie, est relié à la machine de traitement par l'intermédiaire d'un cordon (10, 31, 33) (figures 1, 2, 3, 4, 5) et utilisent cinq conducteurs respectivement nommés RTS, RXD, DTR, TXD, GND. L'invention utilise exclusivement ces cinq conducteurs d'une façon adaptée pour le fonctionnement du dispositif. Dans l'exemple illustré sur les figures 6 et 7, le conducteur RTS, sert à produire les tensions positives d'alimentation des divers composants du circuit. Le conducteur RXD est utilisé pour la sortie des signaux venant du capteur de position constitué par la sphère (ou le dispositif optique équivalent), et pour la sortie des signaux du module (44, 46). Le conducteur DTR sert normalement à alimenter en tension négative les composants qui le nécessitent, et dans le cadre de la présente invention, il est utilisé de façon particulièrement judicieuse pour commander le mode de fonctionnement de l'ensemble du dispositif, à savoir pour mettre le dispositif soit en position capteur, soit en position module, soit en position capteur en permettant que le module fonctionne. Le conducteur TXD est utilisé pour envoyer des messages en direction du module, lorsque celui-ci est en fonctionnement, et enfin le conducteur GND est le conducteur de masse, servant à relier la masse du dispositif à celle de la machine de traitement auquel il est connecté.

De façon connue en soi, le circuit électronique comporte un contrôleur de capteur (47) qui reçoit sur certaines de ses entrées les signaux électriques émis par les capteurs (48, 49) de position de la sphère, qui sont par exemple les codeurs rotatifs (6a, 7a) des figures 1, 2, 3 ou (39, 40) de la figure 5, ainsi qu'il a déjà été expliqué précédemment. Le contrôleur de capteur, de façon connue en soi, grâce aux signaux qu'il émet, permet que la machine de traitement détermine la nouvelle position du capteur manuel suite à un déplacement de ce dernier. L'un des codeurs (48) permet de déterminer les déplacements sur un axe X correspondant par exemple à l'axe horizontal de l'écran, alors que le second codeur (49) permet de déterminer les déplacements sur un second axe perpendiculaire au premier, par exemple l'axe vertical de l'écran.

Le contrôleur (47) de capteur a été représenté également relié à deux boutons (INT1, INT2), correspondant aux boutons (8, 9) des figures 1, 2, 3 (22, 23) de la figure 4 ou (41) de la figure 5. Ainsi qu'il a déjà été expliqué, ces boutons ne sont pas nécessairement présents, puisque la validation de la position du capteur, ou le dialogue peut s'effectuer à l'aide de touches appropriées du clavier dont est pourvu une machine de traitement. Enfin, le contrôleur (47) de capteur reçoit une tension d'alimentation Vcc par l'intermédiaire du conducteur RTS et d'un circuit électrique approprié qui sera décrit plus en détail ultérieurement. La sortie du contrôleur (47) de capteur est reliée à une première entrée d'un multiplexeur (50) dont l'autre entrée reçoit les signaux émis par la borne d'entrée/sortie I/O du module (44 ou 46). La sortie du multiplexeur (50) est reliée à une entrée d'un amplificateur opérationnel (51) dont la tension positive d'alimentation (normalement le +12 volts) est fournie par le conducteur RTS, et dont la tension négative est fournie par le conducteur DTR. La sortie de l'amplificateur opérationnel est reliée au conducteur RXD. L'entrée de commande du multiplexeur (50) est reliée à la sortie d'un circuit logique (52) dont l'état de cette sortie permet que le conducteur RXD reçoive soit les signaux venant du contrôleur de capteurs (47), soit les signaux venant du module (44, 46) ; le circuit logique (52) permet par ailleurs que, lorsque le module fonctionne, la tension d'alimentation Vcc, le signal de réinitialisation RAZ, et le signal d'horloge CLK soient appliqués aux bornes correspondantes. Le circuit électronique (52) comporte un registre à décalage rebouclé (53), à trois sorties S1, S2, S3 et deux portes logiques (54, 55). Dans l'exemple illustré, les portes logiques (54, 55) sont des portes NAND à deux entrées. La première entrée de la première porte (54) est reliée à la première sortie S1 du registre (53), et la seconde entrée de cette première porte est reliée à la troisième sortie S3 du registre. La sortie de cette première porte est reliée à l'entrée de commande du multiplexeur (50). La première entrée de la seconde porte (55) est reliée à la seconde S2 du registre à décalage, et la seconde entrée de cette seconde porte (55) est reliée à la troisième sortie S3 du registre. C'est la sortie de cette seconde porte (55) qui permet de piloter la mise en service du module, comme il sera expliqué ultérieurement. L'entrée du registre à décalage (53) est reliée au point commun entre une première borne d'une résistance R1 et la cathode d'une diode Zener Z1 dont l'anode est reliée à la masse. La seconde borne de la résistance R1 est reliée au conducteur DTR, de sorte que la tension d'entrée du registre est régulée et mise à un niveau adapté grâce à la diode Zener Z1.

La sortie de la seconde porte (55) du circuit (52) est reliée à la base d'un transistor T1 d'une part, et à la cathode d'une seconde diode Zener Z2 d'autre part, dont l'anode est reliée à la masse. Le collecteur de ce transistor T1 est relié au pâle positif d'une batterie (56). L'émetteur du transistor T1 est relié d'une part au conducteur fournissant la tension d'alimentation Vcc au module, d'autre part à l'entrée d'excitation d'un circuit d'horloge (57), permettant de fournir le signal d'horloge CLK au module. Le circuit d'horloge (57) est par exemple, de façon connue en soi, un circuit à quartz. Enfin, l'émetteur du transistor T1 est relié à l'entrée d'un monostable (58) dont la sortie est reliée soit à la borne de réinitialisation RAZ du connecteur (45) (figure 6), ou directement à la borne de réinitialisation RAZ du module (46) (figure 7).

Le fonctionnement est le suivant : le transistor T1 devient conducteur, quand une tension positive est appliquée sur sa base, donc lorsqu'un signal positif est présent à la sortie de la porte NAND (55). Dans ce cas, la batterie (56) débite, par l'intermédiaire du transistor T1, une tension d'alimentation Vcc du module, dont le niveau correct est ajusté grâce à la présence de la diode Zener Z2; simultanément, le générateur d'horloge (57) se met à fonctionner puisque son entrée de commande est excitée, et le circuit monostable (58) délivre une impulsion de commande de réinitialisation des circuits du module.

Dans les circuits courants, la tension nécessaire pour l'alimentation du module est de 5 volts, et dans ce cas, la batterie (56) est par exemple une batterie de 9 volts, et la diode Zener Z2 est alors choisie de façon appropriée pour que la tension qui apparaît entre l'émetteur du transistor T1 et la masse soit de 5 volts. Comme il a été expliqué, la borne d'entrée/sortie du connecteur (45) (figure 6) ou la borne d'entrée/sortie du module (figure 7) est reliée à la seconde entrée du multiplexeur (50). Elle est par ailleurs reliée à une première borne d'une résistance R2, dont la deuxième borne est connectée au conducteur TXD. En outre, entre la première borne de la résistance R2 et la masse, est reliée une diode Zener Z3, dont la fonction est de rendre les niveaux des tensions des signaux issus de TXD compatibles avec les niveaux de tension nécessaires pour le module. En fait, dans la pratique, le signal TXD est émis entre 0 et 12 volts, et la diode Zener Z3 permet de ramener l'excursion de ce signal TXD entre 0 et 5 volts.

Ainsi, lorsque des signaux sont émis sur le conducteur TXD, ils sont transmis à un niveau approprié à la borne d'entrée/sortie (I/O) du module (44) ou (45), et lorsque le module émet à son tour des signaux, ils sont alors disponibles sur la seconde entrée du multiplexeur. Selon l'état du signal apparaissant à l'entrée de commande du multiplexeur, les signaux apparaissant sur la seconde entrée du multiplexeur sont disponibles ou non à la sortie de ce dernier. La commande du multiplexeur sera étudiée plus en détail ultérieurement.

Le pôle positif de la batterie (56) est relié au conducteur RTS par l'intermédiaire d'un circuit de charge constitué par une résistance R3 et une diode D1 en série. La présence de la batterie (56) permet que la puissance fournie par l'intermédiaire du transistor T1 aux circuits électroniques du module (44) soit suffisante.

Par ailleurs, le pôle positif de la batterie (56) est relié au collecteur d'un second transistor T2, de type NPN, dont l'émetteur fournit la tension d'alimentation du contrôleur de capteur (47). La base du second transistor T2 est reliée d'une part à la masse de circuit par l'intermédiaire d'une diode Zener Z4, et d'autre part au conducteur RTS par l'intermédiaire d'une résistance R4. La diode Zener Z4 permet de réguler la tension d'alimentation fournie au contrôleur de capteur (47). Lorsqu'aucune tension n'est présente au niveau du conducteur RTS, alors les transistors T1 et T2 sont bloqués, de sorte que l'énergie de la batterie (56) est économisée.

Bien que ceci n'ait pas été représenté, afin de ne pas surcharger les figures, le signal issu de l'émetteur du transistor T2 peut être utilisé pour fournir, si nécessaire, la tension d'alimentation du multiplexeur (50), du registre à décalage rebouclé (53), et des portes logiques (54, 55).

Le circuit électronique des figures 6 ou 7 permet donc de raccorder le dispositif par l'intermédiaire d'un cordon électrique unique à une interface de type standard, telle qu'une interface V24 ou RS232. Il ne demande aucun autre raccordement en vue de l'alimentation du dispositif et de son canal de communication.

Outre les problèmes d'alimentation, on résout un second problème, puisque généralement les capteurs habituels utilisent une vitesse de transmission de 1200 bauds, alors que les dispositifs à mémoire et/ou microcalculateur nécessitent une vitesse de transmission des données au moins égale à 9600 bauds. Le circuit permet que les vitesses de transmission soient obtenues sans inconvénient. Enfin, il permet que les signaux du capteur et ceux du module soient commutés sur le même canal (RXD) à partir de signaux générés par l'interface standard.

Dans le mode de réalisation proposé, l'ensemble constitué par le capteur ou le module dialogue avec l'unité de traitement par l'intermédiaire des signaux TXD, DTR, RXD et RTS, dont les niveaux de tension sont compris habituellement entre moins 12 volts et plus 12 volts. L'excursion du signal TXD est ramenée à 0-5 volts, pour être rendue compatible avec les niveaux de tension du module, par l'intermédiaire de la diode Zener Z3, de sorte que le conducteur TXD peut être utilisé pour envoyer des messages en direction du module, constitué par un support amovible (44), dans le cas de la figure 6, ou non amovible (46), dans le cas de la figure 7.

Lors de la connexion du dispositif, les niveaux de tension aboutissant sur les conducteurs RTS, RXD, DTR, TXD, sont à moins 12 volts. Dans ce cas, l'état des sorties S1, S2, S3 du registre rebouclé (53) est indifférent.

Lors de l'initialisation du dispositif, DTR est maintenu à moins 12 volts et RTS passe à plus 12 volts, de sorte que le dispositif, et notamment l'amplificateur (51) et le registre (53), sont alimentés.

Au même moment, le registre (53) s'initialise, de sorte que sa première sortie S1, passe par exemple à un niveau logique 0 (état bas), alors que les deux autres sorties (S2, S3) passent à un niveau logique 1 (état haut). Il en résulte que la sortie S54 de la première porte logique (54) passe à l'état haut, alors que la sortie S55 de la seconde porte logique passe à l'état bas. En conséquence, le premier transistor T1 reste bloqué, ce qui a pour effet que le module ne fonctionne pas. L'état haut de la sortie S54 de la première bascule positionne le multiplexeur dans une configuration telle que ce sont les signaux provenant du contrôleur de capteur (47) qui sont disponibles à la sortie du multiplexeur (50) (premier état de fonctionnement).

Suite à la mise en communication de la sortie du contrôleur de capteur (47) avec l'entrée de l'amplificateur (51), par l'intermédiaire du multiplexeur (50), le contrôleur de capteur envoie sa séquence habituelle de reconnaissance initiale, par exemple constituée d'un train de 4 octets.

Dans l'état qui vient d'être décrit, le dispositif fonctionne absolument comme un périphérique de pointage classique. Il en résulte que lorsque l'un ou l'autre des moyens incorporés dans le boîtier, pour transformer son mouvement en grandeur électrique, est sollicité, le contrôleur de capteur (47) envoie de façon classique 3 octets de contrôle à la vitesse de 1200 bauds. Les octets sont envoyés après un calcul effectué par le contrôleur de capteur, et sont fonction du sens et de la valeur du déplacement de chacun des moyens (48, 49) transformant le mouvement en grandeur électrique :
- un premier octet, par exemple, donne le sens de déplacement ;
- un second octet donne la valeur de déplacement de l'un des moyens ;
- un troisième octet donne par exemple la valeur de déplacement du second moyen.

Lorsque l'unité de traitement de la machine veut établir un dialogue avec le module (44) ou (46), elle envoie une impulsion positive de plus 12 volts sur le conducteur DTR pendant une durée relativement longue, par exemple de l'ordre de 10 millisecondes. Le registre est alors décalé d'une bascule, de sorte que sa seconde sortie S2 passe au niveau logique 0 (état bas), sa première sortie S1 passant alors à l'état logique 1 (niveau haut) et sa troisième sortie S3 restant dans son état précédent, c'est-à-dire au niveau logique haut. Dans ce cas, la sortie S54 de la première porte NAND (54) bascule à l'état bas, et simultanément la sortie S55 de la seconde porte NAND (55) bascule à l'état haut. Il en résulte que le premier transistor T1 devient conducteur, ce qui entraîne les évènements suivants :
- une tension Vcc d'alimentation est appliquée sur le module par l'intermédiaire de la borne correspondante du connecteur (45), dans le cas où le module est amovible ou directement sur la borne adéquate du module (46), lorsque celui-ci est intégré ;
- un signal d'horloge CLK est généré par le générateur (57) et est appliqué à l'entrée correspondante du module ;
- le circuit monostable (58) émet une impulsion de réinitialisation RAZ du module ;
- le signal de commande du multiplexeur (50) ayant été modifié, ce sont les signaux apparaissant sur sa seconde entrée qui sont transmis à la sortie en direction de l'amplificateur (51), c'est-à-dire les signaux apparaissant sur la borne d'entrée et sortie I/O du module (second état de fonctionnement).

Dans cet état, le dispositif permet qu'un dialogue soit établi entre la machine de traitement (ou l'ordinateur) et le module dans les deux sens à n'importe quelle vitesse par l'intermédiaire des liaisons TXD et RXD. En particulier, l'ordinateur peut recevoir la réponse du module au signal de réinitialisation (RAZ) et peut ensuite dialoguer par exemple à une vitesse de transmission de 9600 bauds. L'ordinateur est donc en mesure dans cette configuration d'envoyer des ordres par l'intermédiaire du conducteur TXD, afin que le module effectue des traitements, et émette une réponse, telle que par exemple le résultat de son calcul, par l'intermédiaire de sa borne d'entrée/sortie I/O, réponse qui est alors transmises à l'ordinateur par le conducteur RXD.

Il faut cependant noter que dans cet état, aucun déplacement du capteur ne peut être pris en compte, puisque la sortie du contrôleur (47) de capteur n'est pas mise en communication avec l'unité de traitement. D'une façon très avantageuse, le circuit électronique des figures 6 ou 7 permet que le module exécute des calculs ou des fonctions pendant que le capteur de déplacement est utilisé. Il n'est en effet pas toujours nécessaire que les résultats des calculs du module soient retransmis vers l'ordinateur, le module pouvant se contenter d'effectuer des calculs, de mettre les résultats en attente, et de retransmettre les résultats dès que sa sortie est mise en communication avec le conducteur RXD.

Le troisième état de fonctionnement est consécutif à une nouvelle impulsion positive de plus 12 volts sur la ligne DTR. Dans ce cas, le registre à décalage se décale à nouveau d'une bascule, de sorte que sa troisième sortie S3 passe à l'état logique 0 (état bas), sa seconde sortie S2 passant alors à nouveau à l'état logique 1 (état haut), et sa première sortie S1 restant à l'état haut qu'elle occupait auparavant. Dans cette configuration, la sortie S54 de la première porte NAND (54) est alors à l'état haut, mettant le multiplexeur (50) dans une configuration telle, que ce sont les signaux apparaissant à la sortie du contrôleur (47) de capteur qui sont retransmis en direction de l'amplificateur (51), et donc sur le conducteur RXD, mais simultanément, la sortie S55 de la seconde porte (55) est également à l'état haut, entraînant le fonctionnement du module.

Cependant, dans cet état, aucun résultat d'un calcul, ou d'une fonction exécutée par le module, ne peut être transmis en direction de l'ordinateur, puisque les signaux qui sont émis sont ceux provenant du contrôleur de capteur.

Il est cependant possible de passer de cet état dans lequel le capteur et le module sont simultanément actifs, à celui dans lequel simplement le capteur travaille et ses résultats peuvent être transmis en direction de l'ordinateur, sans que les circuits du module soient réinitialisés, afin d'éviter de perdre les résultats de calculs.

Comme il a été expliqué, le registre à décalage est un registre rebouclé, de sorte que le passage d'un état à l'autre se fait selon une chronologie bien établie, et pour passer de l'état 3 à l'état 2, il est nécessaire de repasser par l'état 1.

Le tableau qui suit illustre les différents états que peuvent prendre les sorties S1, S2, S3, du registre (53), et l'état correspondant des sorties S54 et S55 de la première (54) et seconde (55) portes logiques connectées sur les sorties du registre.

| | S1 | S2 | S3 | S54 | S55 |
|---|---|---|---|---|---|
| Mise sous tension | x | x | x | x | x |
| Etat 1 | 0 | 1 | 1 | 1 | 0 |
| Etat 2 | 1 | 0 | 1 | 0 | 1 |
| Etat 3 | 1 | 1 | 0 | 1 | 1 |

A la mise sous tension, l'état des différentes sorties du registre et des portes est indifférent, ce qui a été symbolisé par un X dans le tableau, l'état 1 est celui qui suit immédiatement la réinitialisation des circuits du dispositif, entraînant la mise en service exclusivement des fonctions de pointage, l'état 2 est celui qui suit l'état 1 et met en fonctionnement et prend en compte exclusivement l'état du module, et l'état 3 est celui qui permet que le module fonctionne, alors que les déplacements du capteur sont pris en compte.

On rappelle que le passage de l'état 1 à l'état 2, ou le passage de l'état 2 à l'état 3, ou le passage de l'état 3 à l'état 1 se fait en appliquant une impulsion positive de 12 volts pendant une durée relativement longue d'environ 10 millisecondes au niveau du conducteur DTR.

Le problème qui se pose lorsqu'il s'agit de passer de l'état 3 à l'état 2 est qu'il faut d'abord repasser par l'état 1, mais il faut également ne pas réinitialiser les circuits du module, faute de quoi les résultats calculés alors que le module est en l'état 3 risquent d'être perdus ou altérés.

Or, comme il a été expliqué, le passage dans l'état 1 entraîne la non conduction du transistor T1. Cependant, étant donné qu'il existe toujours des condensateurs de filtrage, ou des capacités parasites à l'intérieur des circuits électroniques, l'application de deux impulsions extrêmement courtes et extrêmement rapprochées permet de passer de l'état 3 à l'état 2 sans que ce transistor T1 se bloque et donc sans que le circuit d'horloge (57) soit désactivé, et sans qu'une impulsion de réinitialisation RAZ soit appliquée par le circuit monostable (58).

Dans un mode de mise en oeuvre particulier, on applique par exemple des impulsions relativement courtes, de l'ordre de 2 millisecondes environ. Ainsi, l'alimentation du module n'est pas interrompue, ce qui permet au support de continuer à fonctionner normalement pendant la phase de commutation de l'état 3 à l'état 2 en passant par l'état 1.

Il est bien entendu que les modes de réalisation qui ont été décrits ne sont nullement limitatifs. En particulier, l'emploi de portes (54, 55) de type NAND en sortie du registre à décalage rebouclé (53) a été décrit. Ce type de porte est valable seulement si, suite à la réinitialisation, la première sortie S1 du registre (53) est à l'état bas, alors que les deux autres sorties S2, S3 se positionnent à l'état haut (premier état de fonctionnement), et si, suite à une première impulsion sur l'entrée du registre, la seconde porte passe à l'état bas, la première se positionnant alors à l'état haut, et la troisième restant à l'état haut, et ainsi de suite. Si par contre, suite à la réinitialisation du registre (53), la première sortie S1 de ce dernier s'était positionnée à l'état haut, alors que les deux autres s'étaient positionnées à l'état bas, et ainsi de suite, alors il aurait fallu constituer non plus des portes NAND mais des portes OU-EXCLUSIF.

D'autres variantes sont envisageables, dans lesquelles l'état 1 n'est pas celui dans lequel le contrôleur (47) de capteur est pris en compte, mais par exemple celui dans lequel le module (44, 46) l'est. Il est possible d'envisager un autre séquencement des états, en utilisant un circuit électronique (52) logique approprié. Les transformations qui s'imposent sont à la portée de l'homme du métier, sans qu'il soit nécessaire de le décrire davantage dans la présente demande.

Les circuits des figures 6 ou 7 peuvent être aisément réalisés en partant d'un circuit classique contenu dans un périphérique de pointage tel qu'une souris. En effet, il utilise entre autres le contrôleur de capteur déjà existant, et les liaisons classiques que l'on rencontre dans ce genre de capteur. Des adaptations ont été faites, à savoir l'adjonction de la batterie (56), du multiplexeur (50), du circuit logique (52), et des divers organes d'adaptation de tension ou de pilotage. Néanmoins, ce circuit n'est pas totalement satisfaisant car il ne permet pas le passage direct d'un état à n'importe quel autre. Il ne permet pas par exemple de passer de l'état 1 à l'état 3 directement ou bien encore de l'état 2 à l'état 1, ou de l'état 3 à l'état 2. Il faut donc que l'ordinateur émette des signaux de durées différentes selon le type de dialogue qu'il désire établir.

Le circuit de la figure 8 montre un mode de réalisation qui permet de réduire le nombre de composants, et d'obtenir une vitesse de transmission désirée utilisant un protocole commun pour le capteur et le lecteur, et permet le passage direct d'un état à l'autre sans passer par un état intermédiaire comme c'était le cas précédemment.

Sur cette figure 8, on a illustré le cas où le module est amovible et où, en conséquence, les circuits électroniques du module sont mis en communication avec les circuits électroniques du dispositif par l'intermédiaire d'un connecteur (45) incorporé dans ce dernier.

Bien entendu, le schéma, au cas où le module ne serait pas amovible, serait identique, abstraction faite du connecteur.

Le principe mis en oeuvre dans ce circuit électronique consiste à utiliser un microcontrôleur (59) pour assurer la gestion en périphérique de pointage et la gestion du module.

En fait, le microcontrôleur (59) remplace le circuit électrique logique (52), le multiplexeur (50), et le contrôleur (47) de capteur.

Dans le mode de réalisation de la figure 8, le microcontrôleur (59) du capteur/lecteur et le module (60) reçoivent leur tension d'alimentation Vcc à l'aide d'un circuit électrique semblable à celui des figures 6 et 7.

L'alimentation Vcc du microcontrôleur (59), de même que celle du module (60) sont obtenues à partir de la tension positive délivrée au niveau du conducteur RTS.

Plus précisément, la borne d'alimentation en tension Vcc du microcontrôleur (59) est reliée à l'émetteur d'un premier transistor T3 de type NPN, dont la base est reliée à la masse par l'intermédiaire d'une première diode Zener Z5, afin de réguler la tension Vcc fournie à la borne d'entrée considérée du microcontrôleur.

D'autre part, le conducteur RTS est relié à une première borne d'une première résistance R5 dont la seconde borne est reliée à l'anode d'une diode D2, dont la cathode est reliée au connecteur du premier transistor T3.

Une première borne d'une seconde résistance R6 est connectée au point commun au conducteur RTS et à la première borne de la première résistance R5. La seconde borne de cette seconde résistance R6 est réliée à la base du premier transistor T3.

Le pôle positif d'une batterie (61) est connecté au connecteur du premier transistor T3, et le pôle négatif de la batterie est connecté à la masse. Ainsi, la batterie (61) peut être chargée par l'intermédiaire de la première résistance R5 et de la diode D2 lorsqu'une tension est présente sur le conducteur RTS. Par ailleurs, le pôle positif de la batterie (61) est également relié au connecteur d'un second transistor T4 dont la base est reliée à la masse par l'intermédiaire d'une seconde diode Zener Z6. L'émetteur de ce second transistor T4 est relié à la borne d'alimentation en tension Vcc du module (60), éventuellement par l'intermédiaire d'un connecteur (66), lorsque le module est amovible. La base du second transistor T4 est en outre connectée à une sortie du microcontrôleur par l'intermédiaire d'une troisième résistance R7. Cette sortie du microcontrôleur délivre un signal positif lorsqu'il est nécessaire que le module (60) soit alimenté, comme il sera expliqué ultérieurement.

Cependant, on comprend bien, en regardant les circuits et la description qui en a été faite, que le premier transistor T3 d'une part ne conduit que lorsqu'une tension est présente au niveau du conducteur RTS ; le microcontrôleur (59) n'est alimenté que lorsqu'une tension est présente sur le conducteur RTS, et le second transistor T4 ne peut donc conduire que si une tension est fournie au microcontrôleur (59), de sorte que l'énergie de la batterie est économisée lorsque le dispositif n'est pas alimenté.

Outre son entrée d'alimentation en tension Vcc et sa sortie reliée à la base du second transistor T4 par l'intermédiaire de la troisième résistance R7, le microcontrôleur (59) comporte un certain nombre d'autres bornes d'entrée et/ou sortie.

Il comporte deux entrées recevant les signaux issus des moyens (62, 63) permettant de transformer le mouvement du capteur en signaux électriques permettant au microcontrôleur de déterminer le sens et la valeur du déplacement.

Il comporte également une entrée d'interruption INT reliée d'une part à une première borne d'une résistance R8 dont la seconde borne est reliée au conducteur DTR et d'autre part à une diode Zener Z7 qui est elle-même reliée à la masse. Le rôle de cette entrée d'interruption est de recevoir des impulsions venant du conducteur DTR, afin d'aiguiller le microcontrôleur sur le module et/ou sur les moyens (62, 63) de contrôle du pointage.

Les rôles de la résistance R8 et de la diode Zener Z7 sont de rendre compatibles les niveaux de tension des signaux émis au niveau du conducteur DTR avec les niveaux de tension requis à l'entrée du microcontrôleur (59). On rappelle que les signaux émis sur DTR sont généralement compris entre moins 12 volts et plus 12 volts, alors que le microcontrôleur nécessite des signaux de l'ordre de 5 volts.

Le microcontrôleur comporte une autre entrée reliée au conducteur TXD par l'intermédiaire d'un pont constitué par une résistance R9, et une diode Zener Z8. La résistance R9 est intercalée en série entre le conducteur TXD et ladite borne d'entrée du microcontrôleur, et la diode Zener est intercalée entre la borne d'entrée et la masse. Cette entrée reçoit les signaux qui doivent être retransmis ensuite au module (60), lorsqu'un dialogue doit être établi entre le module et l'unité de traitement.

Le microcontrôleur (59) comporte également une borne d'entrée/sortie qui permet de transmettre les signaux venant du conducteur TXD en direction de la borne d'entrée/sortie I/O du module, et de recevoir de ce dernier les signaux qui devront être retransmis à l'unité de traitement par l'intermédiaire du conducteur RXD. A cet effet, une sortie du microcontrôleur (59) est reliée au conducteur RXD par l'intermédiaire d'un amplificateur opérationnel (64) dont le rôle est de remettre le niveau des signaux sortant du microcontrôleur à un niveau compatible avec les signaux devant transiter sur le conducteur RXD. L'amplificateur opérationnel est alimenté en tension positive par le conducteur RTS auquel il est directement relié, et en tension négative par le conducteur DTR auquel il est également relié.

Le microcontrôleur (59) comporte une sortie de commande d'un circuit générateur d'horloge (65) dont la sortie est reliée à l'entrée d'horloge CLK du module. Lorsqu'un signal est présent à la sortie considérée du microcontrôleur (59), le générateur d'horloge (65) délivre un signal d'horloge approprié. Enfin, le microcontrôleur (59) comporte une sortie reliée directement à l'entrée de réinitialisation RAZ du module, qui applique une impulsion de réinitialisation RAZ à ce dernier lorsque cela est nécessaire.

Ce montage permet que par l'intermédiaire du conducteur DTR, des impulsions d'interruption soient envoyées sur l'entrée associée du microcontrôleur à travers le circuit adapteur de tension constitué par la résistance R8 et la diode Zener Z7.

Le fonctionnement du dispositif peut être similaire à celui décrit en regard des figures 6 et 7, dès lors que les fonctions d'aiguillage sont assurées par un programme qui se trouve dans la mémoire du microcontrôleur. Ce programme teste les signaux émis sur le conducteur DTR, et assure le passage dans les différents états décrits en regard des figures 6 et 7.

Par exemple, des impulsions positives peuvent être émises sur le conducteur DTR par l'unité de traitement à laquelle est relié le dispositif, dès lors qu'il est nécessaire de changer d'état.

Dans une variante, non représentée, le conducteur DTR n'est relié à aucune entrée du microcontrôleur (59), mais sert seulement à alimenter en tension négative l'amplificateur (64). Dans ce cas, les ordres d'aiguillage pourraient être envoyés sous forme codée sur le conducteur TXD, et le microcontrôleur interpréterait alors les signaux venant sur TXD pour positionner ses sorties dans une configuration correspondant à l'un des trois états décrits précédemment. Cette variante aurait l'avantage de libérer la ligne DTR pour assurer exclusivement l'alimentation de l'amplicateur opérationnel (64) en moins 12 volts.

L'intérêt du montage de la figure 8, ou de sa variante (non représentée) dans laquelle des signaux codés seraient émis sur le conducteur TXD pour piloter le microcontrôleur est qu'il permet, qu'en fonction de l'état souhaité, seules les sorties appropriées du microcontrôleur émettent les signaux nécessaires. Ainsi, à titre d'exemple, lorsque le dispositif est dans un premier état, ce sont les signaux émis par les capteurs de position qui sont pris en compte, de sorte que sur le conducteur RXD sont émis des signaux fonction du déplacement ou de la position du capteur.

Lors du passage du premier état dans le second état, le générateur de signal d'horlge (65) est activé par la sortie correspondante du microcontrôleur ; sa sortie reliée à la base du transistor T4 par l'intermédiaire de la résistance R7 émet un signal positif pour rendre ce transistor conducteur, et une impulsion de réinitialisation est émise sur l'entrée de réinitialisation RAZ du module (60). Simultanément, la ligne d'entrée/sortie I/O du module est mise en communication avec le conducteur RXD par l'intermédiaire des circuits internes au microcontrôleur et de l'amplificateur opérationnel (64).

Lors du passage du second état dans le troisième état, le signal de commande du circuit d'horloge (65) est maintenu, le signal rendant le transistor T4 conducteur est également maintenu, mais aucun signal de réinitialisation n'est émis. Il en est de même lorsque le dispositif doit repasser de l'état 3 à l'état 2.

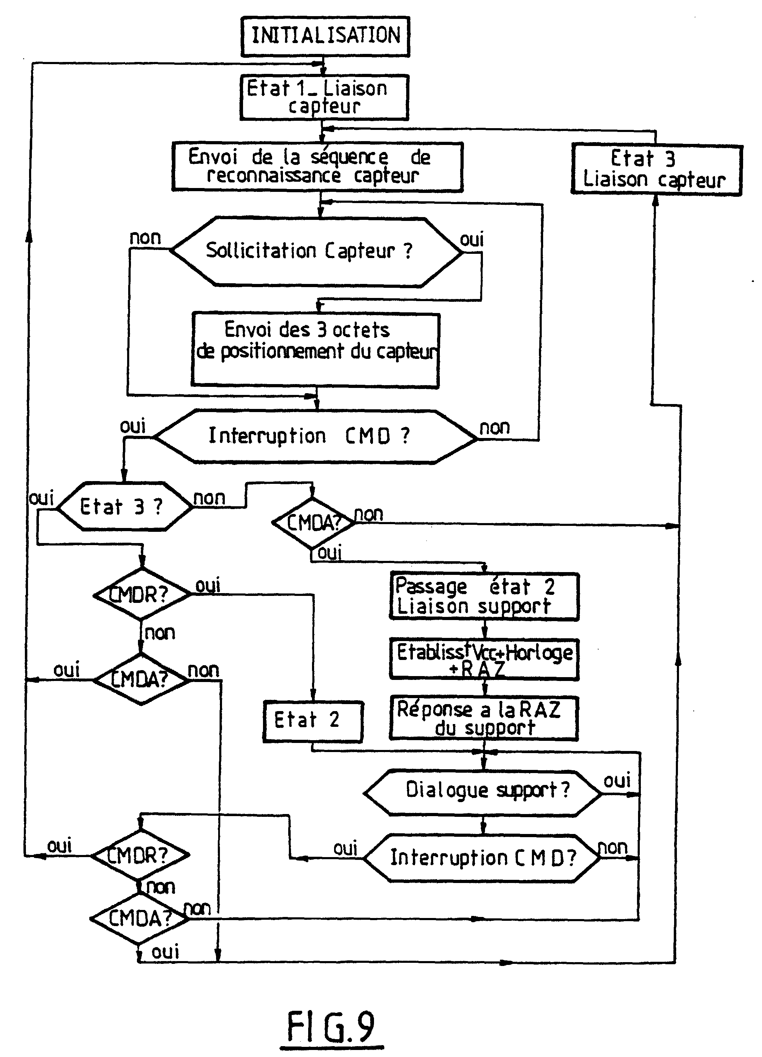

Le dispositif décrit en regard de la figure 8, ou sa variante dans laquelle la liaison TXD sert à envoyer des signaux codés dès lors qu'il faut changer d'état, peut fonctionner, à titre d'exemple, conformément à l'organigramme de la figure 9.

A l'initialisation, le microcontrôleur de capteur/lecteur (59) se positionne en mode capteur, c'est-à-dire dans un état correspondant à l'état 1 des figures 6 et 7, et émet la séquence de reconnaissance correspondante.

Le programme de scrutation du déplacement du dispositif devient alors actif et émet les signaux nécessaires à la détection du mouvement, en cas de solicitation du dispositif.

Si une impulsion est envoyée sur DTR, ou bien si le microcontrôleur reçoit un ordre approprié sur TXD, le programme du capteur est alors interrompu, ce qui est matérialisé par l'apparition d'une interruption CMD. Un test a donc lieu pour déterminer de quel type d'interruption il s'agit, c'est-à-dire pour déterminer si la requête a pour objet le passage dans l'état précédent (interruption CMDR) ou le passage dans l'état suivant (interruption CMDA).

Par ailleurs, afin de conférer une plus grande sécurité au traitement des requêtes en interruption, lorsque le dispositif est soit dans l'état 1, soit dans l'état 3, dans lesquels les signaux du capteur de position sont transmis sur le conducteur DTR, un test complémentaire a lieu pour vérifier en fait dans lequel, parmi ces deux états, le dispositif se trouve.

Si le dispositif est dans l'état 1, une interruption CMDA aura pour effet de le faire passer dans l'état 2, c'est-à-dire que l'alimentation Vcc du module (60) sera établie, et le séquencement des signaux d'horloge et de remise à zéro du module seront déclenchés. Par contre, si le dispositif est dans l'état 1 et qu'une interruption CMDR apparaît, le dispositif sera alors positionné à l'état 3, c'est-à-dire que la tension d'alimentation sera fournie au module, les signaux d'horloge et de remise à zéro du module seront établis, de sorte que le module fonctionnera (60), les signaux issus du capteur de position étant transmis sur la liaison DTR.

Lors de l'apparition de l'interruption CMDR, alors que le dispositif se trouve à l'état 3, dont le but est de faire passer le dispositif dans l'état 2, alors la tension d'alimentation Vcc du module (60) sera maintenue, de même que la tension d'horloge, mais aucun signal de réinitialisation du module ne sera émis. La sortie RXD du dispositif recevra les signaux issus de la borne d'entrée/sortie I/O du module.

Dans le cas où les signaux d'interruption sont générés sur le conducteur DTR, une interruption CMDA peut correspondre à la détection d'une seule impulsion sur ce conducteur dans un intervalle de temps donné, par exemple dans un intervalle de moins de 10 millisecondes. Une interruption CMDR peut, elle, correspondre à la détection de deux impulsions dans le même intervalle. Ceci n'est qu'un exemple illustratif, et toute solution équivalente est à la portée de l'homme du métier.

Lorsque la liaison TXD est utilisée pour recevoir les signaux d'interruption, une interruption CMDA peut correspondre à un premier signal codé, alors qu'une interruption CMDR correspond à un second signal codé. La seule condition, dans ce cas, est que ces signaux codés soient différenciés de ceux qui peuvent être pris en compte par le module (60). Ils ne doivent par exemple pas correspondre à un code de commande du module.

Bien entendu, pour que la sécurité maximum puisse être assurée à l'aide d'un dispositif conforme à l'invention, il est souhaitable de personnaliser le module, que celui-ci soit amovible ou incorporé de manière définitive à l'intérieur du boîtier. Ainsi, chaque module peut être différencié par un secret différent, ou par tout autre procédé de l'art antérieur applicable aux cartes à microcalculateur et/ou à mémoire.

## Revendications

1. Dispositif périphérique de pointage, portatif et commandé par un utilisateur, pour coopérer avec un écran d'une machine de traitement de données, comprenant :
- des moyens de pointage (2, 21) servant à générer un signal de pointage ;
- un module électronique (44, 46, 60) extérieur à la machine de traitement et agencé pour transmettre des données à celle-ci de façon notamment à assurer la sécurité d'applications ou de données traitées par la machine de traitement ;
caractérisé en ce que ledit module est un module à mémoire et/ou microcalculateur agencé pour transmettre des données à la machine de traitement et recevoir des données de celle-ci, et le dispositif périphérique de pointage comprend en outre :
- une première interface standard servant à connecter ledit dispositif périphérique de pointage à une interface de périphérique à usage général de la machine de traitement, comportant plusieurs conducteurs séparés incluant un conducteur de transmission de données, un conducteur de réception de données et des conducteurs de contrôle, ledit module à mémoire et/ou microcalculateur recevant l'information de la machine de traitement par ledit conducteur de réception de données ; et,
- des moyens d'aiguillage (50) connectés à une sortie desdits moyens de pointage (2,21) et à une sortie dudit module, lesdits moyens d'aiguillage étant contrôlés par au moins un signal de contrôle transmis par ladite machine de traitement par un desdits conducteurs de façon à ce que ledit signal de pointage ou un signal de sortie dudit module soit transmis par ledit conducteur de transmission de données.

2. Le dispositif périphérique selon la revendication 1, dans lequel lesdits moyens d'aiguillage (50) peuvent mettre le dispositif périphérique dans trois états:
- un premier état dans lequel lesdits moyens de pointage (2,21) sont actifs et ledit signal de pointage est transmis à ladite machine de traitement de données pendant que ledit module (44, 46, 60) est inactif;
- un deuxième état dans lequel ledit module est actif et échange de l'information avec ladite machine de traitement de données pendant que lesdits moyens de pointage sont inactifs; et
- un troisième état dans lequel lesdits moyens de pointage sont actifs et ledit signal de pointage est transmis à ladite machine de traitement de données pendant que ledit module est actif afin d'effectuer du traitement interne et/ou de recevoir de l'information de ladite machine de traitement de données.

3. Le dispositif périphérique selon la revendication 2, dans lequel ledit module (44, 46, 60) requiert un signal d'horloge et un signal de réinitialisation, ledit dispositif périphérique fournissant ledit signal d'horloge pour au moins la durée des deuxième et troisième états, et ledit dispositif périphérique fournissant ledit signal de réinitialisation seulement au moment d'un changement du premier au deuxième état.

4. Le dispositif périphérique selon la revendication 1, incluant une batterie (56), un circuit de charge (R3, D1) recevant une tension fournie par un desdits conducteurs de ladite première interface standard, ladite batterie alimentant ledit module (44, 46, 60) et lesdits moyens d'aiguillage (50).

5. Le dispositif périphérique selon la revendication 1, dans lequel ledit module a une seconde interface de type série (45, 66) pouvant recevoir et envoyer de l'information par une même borne, connectée audit conducteur de réception de données de ladite première interface et auxdits moyens d'aiguillage (50).

6. Le dispositif périphérique selon la revendication 1, dans lequel ledit signal de contrôle pour contrôler lesdits moyens d'aiguillage (50) est transmis par ledit conducteur de réception de données de ladite première interface standard et peut être distingué d'un signal d'information envoyé au module (44, 46, 50) par le même conducteur.

7. Le dispositif périphérique selon la revendication 1, dans lequel ledit signal de contrôle pour contrôler lesdits moyens d'aiguillage (50) est transmis par un conducteur de contrôle de ladite première interface standard, appelé DTR, un signal standard DTR de la machine de traitement de données fournissant un premier niveau de tension par ledit conducteur pour permettre aux moyens d'aiguillage de transmettre à la machine de traitement de données n'importe quel signal fourni à une entrée de ceux-ci; ledit signal de contrôle fournit un deuxième niveau de tension faisant passer les moyens d'aiguillage (50) d'un premier état dans lequel ceux-ci sont agencés pour transmettre ledit signal de pointage à un second état dans lequel les moyens d'aiguillage sont agencés pour transmettre ledit signal de sortie du module.

8. Le dispositif périphérique selon la revendication 1, dans lequel ledit signal de contrôle pour contrôler lesdits moyens d'aiguillage (50) est transmis par un conducteur de contrôle de ladite première interface standard, appelé DTR, un signal standard DTR de la machine de traitement de données fournissant un premier niveau de tension par ledit conducteur pour permettre aux moyens d'aiguillage de transmettre à la machine de traitement de données n'importe quel signal fourni à une entrée de ceux-ci; ledit signal de contrôle fournit un deuxième niveau de tension faisant passer les moyens d'aiguillage (50) d'un premier état dans lequel ceux-ci sont agencés pour transmettre ledit signal de sortie du module à un second état dans lequel les moyens d'aiguillage sont agencés pour transmettre ledit signal de pointage.

## Patentansprüche

1. Zeige-Peripherievorrichtung, die tragbar ist, von einem Benutzer gesteuert wird und mit einem Bildschirm einer Datenverarbeitungsmaschine zusammenwirkt, mit:
- Zeigemitteln (2, 21), die der Erzeugung eines Zeigesignals dienen;
- einem elektronischen Modul (44, 46, 60), das sich außerhalb der Verarbeitungsmaschine befindet und so beschaffen ist, daß es an diese Daten in der Weise überträgt, daß insbesondere die Sicherheit der Anwendungen oder der von der Verarbeitungsmaschine verarbeiteten Daten gewährleistet ist;
dadurch gekennzeichnet, daß das Modul ein Speicher- und/oder Mikrorechner-Modul ist, das so beschaffen ist, daß es Daten an die Verarbeitungsmaschine überträgt und Daten von dieser empfängt, und die Zeige-Peripherievorrichtung außerdem enthält:
- eine erste Standardschnittstelle, die dazu dient, die Zeige-Peripherievorrichtung an eine universelle Peripheriegerätschnittstelle der Verarbeitungsmaschine anzuschließen, und mehrere getrennte Leiter einschließlich eines Datensendeleiters, eines Datenempfangsleiters und Steuerleitern enthält, wobei das Speicher- und/oder Mikrorechner-Modul Informationen von der Verarbeitungsmaschine über den Datenempfangsleiter empfängt; und
- Verzweigungsmittel (50), die an einen Ausgang der Zeigemittel (2, 21) und an einen Ausgang des Moduls angeschlossen sind und durch wenigstens ein Steuersignal, das von der Verarbeitungsmaschine über einen der Leiter übertragen wird, in der Weise gesteuert werden, daß das Zeigesignal oder ein Ausgangssignal des Moduls vom Datensendeleiter gesendet wird.

2. Peripherievorrichtung nach Anspruch 1, in der die Verzweigungsmittel (50) die Peripherievorrichtung in drei Zustände versetzen können:
- einen ersten Zustand, in dem die Zeigemittel (2, 21) aktiv sind und das Zeigesignal an die Datenverarbeitungsmaschine übertragen wird, während das Modul (44, 46, 60) inaktiv ist;
- einen zweiten Zustand, in dem das Modul aktiv ist und Informationen mit der Datenverarbeitungsmaschine austauscht, während die Zeigemittel inaktiv sind; und
- einen dritten Zustand, in dem die Zeigemittel aktiv sind und das Zeigesignal an die Datenverarbeitungsmaschine übertragen wird, während das Modul aktiv ist, um die interne Verarbeitung auszuführen und/oder Informationen von der Datenverarbeitungsmaschine zu empfangen.

3. Peripherievorrichtung nach Anspruch 2, in der das Modul (44, 46, 60) ein Taktsignal und ein Reinitialisierungssignal anfordert, wobei die Peripherievorrichtung das Taktsignal wenigstens während der Dauer der zweiten und dritten Zustände liefert und die Peripherievorrichtung das Reinitialisierungssignal nur zum Zeitpunkt eines Wechsels vom ersten zum zweiten Zustand liefert.

4. Peripherievorrichtung nach Anspruch 1, mit einer Batterie (56) und einer Ladeschaltung (R3, D1), die eine von den Leitern der ersten Standardschnittstelle gelieferte Spannung empfängt, wobei die Batterie das Modul (44, 46, 60) und die Verzweigungsmittel (50) versorgt.

5. Peripherievorrichtung nach Anspruch 1, in der das Modul eine zweite Schnittstelle des seriellen Typs (45, 66) besitzt, die Informationen über dieselbe Anschlußklemme empfangen und schicken kann und an den Datenempfangsleiter der ersten Schnittstelle sowie an die Verzweigungsmittel (50) angeschlossen ist.

6. Peripherievorrichtung nach Anspruch 1, in der das Steuersignal zum Steuern der Verzweigungsmittel (50) von der ersten Standardschnittstelle über den Datenempfangsleiter übertragen wird und von einem Informationssignal unterschieden werden kann, das vom selben Leiter zum Modul (44, 46, 50) geschickt wird.

7. Peripherievorrichtung nach Anspruch 1, in der das Steuersignal zum Steuern der Verzweigungsmittel (50) von einem Steuerleiter der ersten Standardschnittstelle, der DTR genannt wird, übertragen wird, wobei ein DTR-Standardsignal der Datenverarbeitungsmaschine über den Leiter einen ersten Spannungspegel liefert, um den Verzweigungsmitteln zu ermöglichen, an die Datenverarbeitungsmaschine ein beliebiges Signal zu übertragen, das an einen ihrer Eingänge geliefert wird, wobei das Steuersignal einen zweiten Spannungspegel liefert, der die Verzweigungsmittel (50) zu einem Wechsel von einem ersten Zustand, in dem diese das Zeigesignal übertragen, zu einem zweiten Zustand, in dem die Zeigemittel das Ausgangssignal des Moduls übertragen, veranlaßt.

8. Peripherievorrichtung nach Anspruch 1, in der das Steuersignal zum Steuern der Verzweigungsmittel (50) von einem Steuerleiter der ersten Standardschnittstelle, der DTR genannt wird, übertragen wird, wobei ein DTR-Standardsignal der Datenverarbeitungsmaschine über den Leiter einen ersten Spannungspegel liefert, um den Verzweigungsmitteln zu ermöglichen, an die Datenverarbeitungsmaschine ein beliebiges Signal zu übertragen, das an einen ihrer Eingänge geliefert wird, wobei das Steuersignal einen zweiten Spannungspegel liefert, der die Verzweigungsmittel (50) zu einem Wechsel von einem ersten Zustand, in dem diese das Ausgangssignal des Moduls übertragen, zu einem zweiten Zustand, in dem die Verzweigungsmittel das Zeigesignal übertragen, veranlaßt.

## Claims

1. Portable peripheral pointing device controlled by a user, to co-operate with a screen of a data processing machine, comprising:
- pointing means (2, 21) used for generating a pointing signal;
- an electronic module (44, 46, 60) external to the processing machine and arranged so as to transmit data thereto in such a way, in particular, as to ensure the security of applications or of data processed by the processing machine;
characterised in that said module is a memory module and/or microcomputer arranged so as to transmit data to the processing machine and receive data therefrom, and the peripheral pointing device further comprises:
- a first standard interface used for connecting said peripheral pointing device to a general-use peripheral interface of the processing machine, comprising several separate conductors including a data transmission conductor, a data reception conductor and control conductors, said memory module and/or microcomputer receiving the information from the processing machine via said data reception conductor; and
- switching means (50) connected to an output of said pointing means (2, 21) and to an output of said module, said switching means being controlled by at least one control signal transmitted by said processing machine via one of said conductors in such a way that said pointing signal or an output signal from said module is transmitted via said data transmission conductor.

2. The peripheral device according to Claim 1, in which said switching means (50) can place the peripheral device in three states:
- a first state in which said pointing means (2, 21) are active and said pointing signal is transmitted to said data processing machine while said module (44, 46, 60) is inactive;
- a second state in which said module is active and is exchanging information with said data processing machine while said pointing means are inactive; and
- a third state in which said pointing means are active and said pointing signal is transmitted to said data processing machine while said module is active in order to perform the internal processing and/or to receive information from said data processing machine.

3. The peripheral device according to Claim 2, in which said module (44, 46, 60) requires a clock signal and a reinitialisation signal, said peripheral device supplying said clock signal for at least the duration of the second and third states, and said peripheral device supplying said reinitialisation signal only at the time of changing from the first to the second state.

4. The peripheral device according to Claim 1, including a battery (56), a charging circuit (R3, Dl) receiving voltage supplied via one of said conductors of said first standard interface, said battery supplying said module (44, 46, 60) and said switching means (50).

5. The peripheral device according to Claim 1, in which said module has a second interface of serial type (45, 66), which can receive and send information via the same terminal, connected to said data reception conductor of said first interface and to said switching means (50).

6. The peripheral device according to Claim 1, in which said control signal for controlling said switching means (50) is transmitted via said data reception conductor of said first standard interface and can be distinguished from an information signal sent to the module (44, 46, 50) via the same conductor.

7. The peripheral device according to Claim 1, in which said control signal for controlling said switching means (50) is transmitted via a control conductor of said first standard interface, known as DTR, a standard DTR signal from the data processing machine supplying a first level of voltage via said conductor in order to allow the switching means to transmit to the data processing machine any signal supplied to an input of said switching means; said control signal supplies a second level of voltage causing the switching means (50) to change from a first state in which they are arranged so as to transmit said pointing signal to a second state in which the switching means are arranged so as to transmit said output signal from the module.

8. The peripheral device according to Claim 1, in which said control signal for controlling said switching means (50) is transmitted via a control conductor of said first standard interface, known as DTR, a standard DTR signal of the data processing machine supplying a first level of voltage via said conductor so as to allow the switching means to transmit to the data processing machine any signal supplied to an input of said switching means; said control signal supplies a second level of voltage causing the switching means (50) to change from a first state in which they are arranged so as to transmit said output signal of the module to a second state in which the switching means are arranged so as to transmit said pointing signal.
